# FASCICULE DE BREVET EUROPEEN

(11) **EP 1 287 628 B1**
(45) Date de publication et mention de la délivrance du brevet: **05.11.2008**
(21) Numéro de dépôt: 01936582.4
(22) Date de dépôt: 18.05.2001
(51) Int. Cl.: H04B 7/08

(54) **RECEPTEUR RADIO COURTE PORTEE**
NAHBEREICH-FUNKEMPFÄNGER
SHORT RANGE RADIO RECEIVER

(30) Priorité: 19.05.2000 FR 0006420
(43) Date de publication de la demande: 05.03.2003
(73) Titulaire: Sagem SA, 75116 Paris (FR)
(72) Inventeur: ERAY, Yves, F-94160 Saint Mandé (FR)
(74) Mandataire: Bloch, Gérard
(86) Numéro de dépôt international: PCT/FR2001/001534
(87) Numéro de publication internationale: WO 2001/089113

(56) Documents cités:
- EP-A- 0 903 456
- US-A- 4 495 653
- US-A- 4 823 140
- US-A- 5 887 247

## Description

La présente invention concerne les récepteurs radio courte portée installés à bord des véhicules automobiles pour recevoir des données, comme par exemple des données de télécommande de verrouillage et de déverrouillage des portières.

Pour verrouiller et déverrouiller à distance les serrures des portières d'un véhicule automobile, le conducteur dispose d'un petit émetteur radio à pile commandant un récepteur logé dans le véhicule et relié à des actionneurs de manoeuvre des serrures. La portée de la liaison radio varie avec le lieu de l'émetteur car l'antenne du récepteur n'est pas parfaitement omnidirectionnelle et, en outre, les masses métalliques du véhicule font écran dans certaines directions.

Chaque type de véhicule automobile présente donc, dans certaines directions qui lui sont propres, des portées de liaison de télécommande qui sont insuffisantes.

On pourrait songer à accroître la puissance émise, mais cette solution ne peut en pratique être retenue car la durée de vie de la pile serait trop réduite.

Un accroissement de la sensibilité du récepteur est exclu, car il augmenterait la sensibilité au bruit radio. En outre, et accessoirement, il est souhaitable de ne pas accroître la portée maximale, afin que le porteur de l'émetteur puisse détecter, d'après le clignotement des feux du véhicule, toute télécommande involontaire de sa part.

La présente invention vise à augmenter la portée minimale de la liaison, en tenant compte des contraintes ci-dessus.

A cet effet, l'invention concerne un récepteur radio courte portée pour signaux de données de véhicule automobile, comportant des moyens d'antenne, présentant un diagramme de rayonnement, reliés à un bloc de traitement des signaux reçus, agencé pour en extraire les données, récepteur caractérisé par le fait que les moyens d'antenne comportent des circuits d'entraînement en rotation du diagramme de rayonnement et le bloc de traitement comporte des circuits de commande des circuits d'entraînement en rotation, associés à des circuits de mesure du niveau de signal reçu dans au moins deux positions du diagramme, les circuits de mesure étant agencés pour piloter les circuits de commande en fonction des mesures.

Les creux de sensibilité du diagramme peuvent ainsi être fonctionnellement éliminés et l'antenne tend donc à être omnidirectionnelle, ce qui augmente sa portée minimale. La rotation du diagramme peut éventuellement s'accompagner d'une modification de sa forme.

Dans une première forme de réalisation du récepteur de l'invention, les moyens d'antenne comportent deux antennes indépendantes avec deux diagrammes de rayonnement respectifs décalés angulairement, reliées au bloc de traitement par les circuits d'entraînement en rotation, agencés pour sélectionner à cet effet l'une des antennes.

On fait ainsi tourner le diagramme de réception du décalage angulaire des diagrammes des deux antennes pour améliorer la sensibilité du récepteur.

Dans une deuxième forme de réalisation, les moyens d'antenne comportent deux éléments linéaires rayonnants et les circuits de commande en rotation relient l'un des deux éléments à l'autre et à un amplificateur de réception de signal composite d'antenne, les circuits de mesure étant agencés pour piloter, à travers les circuits des commande en rotation, une modulation de phase du signal composite et pour déterminer une phase de niveau maximal de réception.

On peut ainsi disposer d'une antenne à diagramme équivalent sensiblement à celui d'une antenne omnidirectionnelle.

L'invention sera mieux comprise à l'aide de la description suivante d'une forme de réalisation préférée du récepteur radio de l'invention, en référence au dessin annexé, sur lequel :

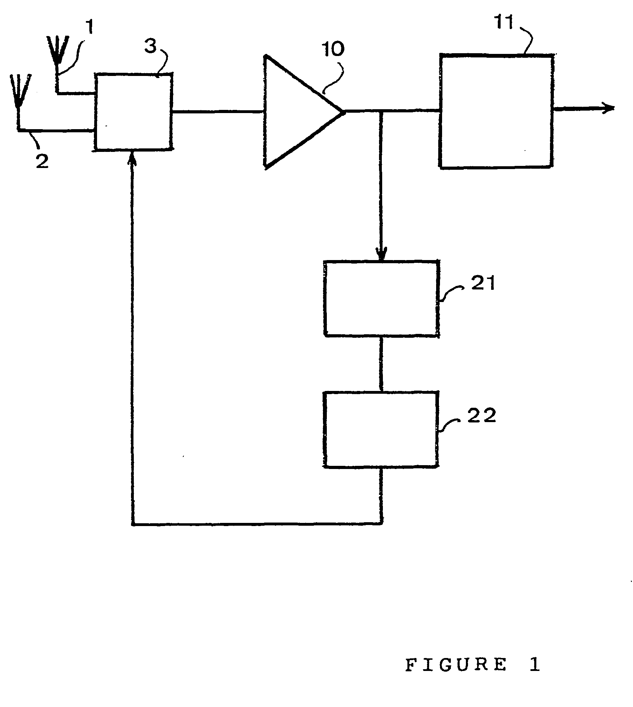

- la figure 1 représente par blocs fonctionnels une première et une deuxième forme de réalisation du récepteur de l'invention et
- la figure 2 représente un circuit déphaseur de la deuxième forme de réalisation.

Le récepteur radio représenté est ici embarqué dans une voiture automobile pour commander le verrouillage et le déverrouillage des serrures des portières. Il comporte un ensemble d'antennes 1, 2 associées à un circuit de réglage d'antenne 3, ensemble relié à l'entrée de circuits classiques 10, 11 de réception et de démodulation, traitant le signal radio de données qui est reçu. La référence 10 désigne un amplificateur à faible bruit et la référence 11 désigne globalement un mélangeur aval associé à un oscillateur local à fréquence intermédiaire, avec les filtres passe-bandes classiques, et un démodulateur de signal de porteuse modulée reçue. Le démodulateur est suivi de circuits de décision comportant un comparateur de niveau qui fournit des 1 et 0 logiques selon que le signal de porteuse reçu dépasse ou non un seuil fixe ou variable en fonction du niveau crête reçu, appelé RSSI, détecté et mémorisé à cet effet. Les données de commande reçues par radio sont transmises à un calculateur de bord qui commande dans cet exemple des actionneurs de verrouillage-déverrouillage de serrures des portières.

Sur une sortie intermédiaire des circuits 10-11 ci-dessus, ici en sortie de l'amplificateur 10, est relié un bloc de traitement 21, 22, avec des circuits 21 de mesure de niveau radio reçu, commandant un microprocesseur 22 qui lui-même commande le circuit 3, commutant ou déphasant les antennes 1, 2, comme expliqué ci-après, pour entraîner en rotation le diagramme de rayonnement de l'antenne globale 1, 2, 3 et ainsi régler angulairement l'antenne. Les antennes 1 et 2 sont ici des éléments linéaires rayonnants constitués chacun d'une piste d'un circuit imprimé qui porte tous les circuits représentés.

Dans la première forme de réalisation, les pistes constituant des antennes respectives 1 et 2 sont isolées l'une de l'autre, donc indépendantes, et sont reliées au bloc de traitement 21, 22 par le circuit 3 qui est dans ce cas un commutateur de sélection de l'une ou l'autre des antennes 1 et 2. Les pistes 1 et 2 formant antennes sont linéaires et s'étendent dans des directions respectives sensiblement perpendiculaires l'une à l'autre.

La deuxième forme de réalisation diffère uniquement de la première forme par le fait que les pistes-antennes 1, 2 sont sensiblement parallèles et le circuit 3 est un déphaseur qui déphase le signal d'une des antennes 1, 2 par rapport à celui de l'autre antenne 2, 1. Précisément ici, l'antenne 1 est directement reliée à l'entrée de l'amplificateur 10 à travers le circuit 3 et les éléments déphaseurs du circuit déphaseur 3 sont interposés entre cette entrée et l'antenne 2. L'amplificateur 10 reçoit donc un signal composite, représentant la somme vectorielle du signal de l'antenne 1 et du signal déphasé de l'antenne 2. Les antennes 1 et 2 étant ici de longueurs identiques, les signaux reçus par les antennes 1 et 2 sont identiques, au déphasage près correspondant à la distance entre les antennes 1, 2. Ce déphasage, qui dépend de la fréquence porteuse, représente l'écart de distance des antennes 1, 2 par rapport à un émetteur des signaux radio. Pour la simplicité de l'exposé, on supposera que ce déphasage est faible ou que la direction de l'émetteur est sensiblement fixe et que ce déphasage, lié à la configuration matérielle des antennes 1, 2, est donc constant.

Le fonctionnement du récepteur va maintenant être expliqué plus en détails.

Dans les deux formes de réalisation, les circuits 21 mesurent le niveau de réception en sortie de l'amplificateur 10 lorsqu'ils commandent ou pilotent le microprocesseur 22 pour qu'il commande lui-même le passage ou le maintien du circuit 3 de réglage d'antenne dans un état déterminé. On notera que le niveau de réception peut être mesuré avant démodulation, comme ici, ou, en variante, après démodulation (signal RSSI). Dans la première forme de réalisation, le circuit 3 prend successivement deux états, pour sélectionner l'une ou l'autre des antennes 1 et 2. Dans la deuxième forme de réalisation, le circuit 3 prend au moins deux états pour que le signal composite puisse correspondre successivement à au moins deux déphasages différents entre les signaux des antennes 1 et 2.

Dans cet exemple, le circuit de réglage 3 est prévu pour apporter, sur commande, un déphasage d'environ 180 degrés au signal de l'antenne 2. Les antennes 1 et 2 reçoivent deux signaux respectifs et l'antenne globale équivalente 1, 2, 3 présente un diagramme de rayonnement ayant deux lobes principaux opposés, selon une direction de sensibilité maximale, et une sensibilité minimale dans la direction perpendiculaire à celle-ci. Si l'on déphase alors de 180 degrés l'un des deux signaux d'antenne appliqués à l'amplificateur 10, les deux signaux d'antenne se composent alors de façon soustractive en ce qui concerne la direction précédente de sensibilité maximale et, par contre, s'ajoutent maintenant en phase dans la direction de sensibilité minimale précédente. Le diagramme de rayonnement de l'antenne globale 1, 2, 3, tourne ainsi de la moitié de la variation de déphasage du circuit de réglage 3. Il est à noter toutefois que la rotation de 90 degrés ci-dessus du diagramme global n'est qu'un cas particulier puisque, de façon générale, il suffit de faire tourner le diagramme pour qu'un minimum insuffisant de sensibilité dans une direction soit remplacé par une valeur de sensibilité dépassant un seuil minimum de détection des signaux dans les circuits 10, 11 qui les exploitent. Par exemple une rotation de 45 degrés peut suffire.

Comme les signaux à détecter proviennent d'un émetteur porté par le propriétaire de la voiture, a priori sensiblement à la même hauteur que la voiture, c'est donc l'angle d'azimut de l'antenne qu'il convient de régler. Les deux antennes 1, 2 sont donc disposées l'une par rapport à l'autre de façon telle que la rotation du diagramme de rayonnement s'effectue autour d'un axe sensiblement vertical.

Les circuits de mesure 21 commandent le microprocesseur 22 pour que le circuit de réglage 3 prenne successivement deux états différents et ils mémorisent au moins la première mesure pour la comparer à la deuxième et ainsi choisir l'état du circuit de réglage 3 fournissant le niveau de réception le plus élevé des deux. La commande des circuits de mesure 21 appliquée à cet effet au microprocesseur 22 reste donc inchangée si la deuxième mesure est supérieure à la première. Sinon, elle repasse à celle de l'état antérieur.

Ainsi, le diagramme de rayonnement est entraîné en rotation par le bloc de traitement 21, 22 et un creux de sensibilité de l'antenne 1, 2, 3 dans une direction déterminée est entraîné en rotation, afin de recevoir des signaux utiles provenant de cette direction.

Dans le cas de la première forme de réalisation, le circuit sélecteur de réglage 3 peut, en variante, être prévu pour sélectionner plus de deux antennes, par exemple trois antennes à lobes répartis angulairement, décalés de 60 degrés, et non plus de 90 degrés. La multiplication des antennes permet de choisir celle des antennes qui est sensiblement orientée vers l'émetteur, donc à sensibilité ou gain optimal. Si le besoin se présentait, on pourrait aussi prévoir que la troisième antenne soit disposée de façon à permettre un balayage en site, donc avec un axe horizontal ou simplement incliné sur la verticale, en plus du balayage en azimut obtenu par la coopération des antennes 1 et 2.

Dans le cas de la deuxième forme de réalisation, le même principe, d'augmentation du nombre de directions de pointage de l'antenne 1, 2, est applicable mais ne nécessite pas d'ajouter des antennes, dans la mesure où l'on prévoit que le circuit déphaseur 3 est réglable à plus de deux états de déphasage, et même éventuellement de façon continue, pour entraîner le lobe de l'antenne globale 1, 2, 3, fournissant le signal composite, dans un mouvement de rotation continu, ou pas à pas. Les circuits de mesure 21 commandent un tel mouvement de balayage en rotation et mesurent et mémorisent cycliquement le niveau reçu pour, après un tel balayage angulaire, commander au microprocesseur 22 d'appliquer au circuit déphaseur 3 une commande correspondant à une orientation du lobe composite dans la direction de sensibilité maximale. Les circuits de mesure 21 pilotent ainsi, à travers le microprocesseur 22 de commande en rotation, une modulation de phase du signal composite pour déterminer une phase de niveau maximal de réception et ainsi régler l'antenne 1, 2, 3 à sa sensibilité maximale.

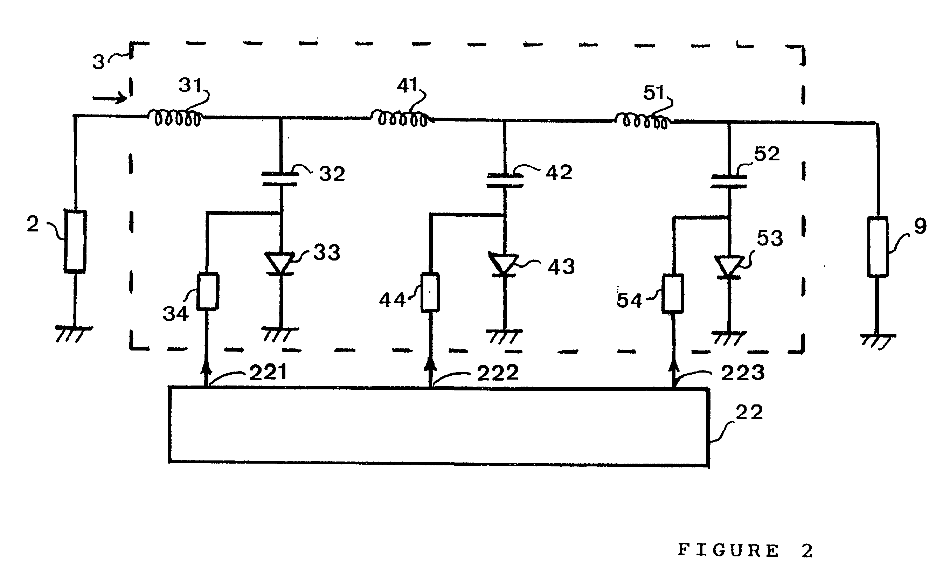

Le circuit déphaseur 3 de la figure 2, fonctionnant à quelques centaines de MHz, relie l'antenne 2 à une impédance de charge de sortie 9, en entrée de l'amplificateur 10, les impédances de l'antenne 2 et de charge 9 étant respectivement adaptées aux impédances caractéristiques d'entrée et de sortie, 50 ohms, du circuit déphaseur 3.

Le circuit déphaseur 3 comporte ici trois cellules élémentaires de déphasage commutable, de 0 ou 90 degrés chacun. Chaque cellule comporte une self série 31, 41, 51 avec, en aval, un condensateur 32, 42, 52 relié à la masse à travers une diode PIN 33, 43, 53, à cathode à la masse. L'anode de la diode 33, 43, 53 est reliée à une sortie de commande respective 221, 222, 223 du microprocesseur 22 à travers une résistance de polarisation 34, 44, 54 de valeur élevée par rapport aux impédances présentées par les autres éléments du circuit déphaseur 3, afin d'éviter un effet permanent de court-circuit, par le microprocesseur 22, des signaux alternatifs traversant les selfs 31, 41, 51.

Les trois signaux de commande issus des sorties 221, 222, 223 du microprocesseur 22 présentent un niveau repos sensiblement nul. Les diodes 33, 43, 53, à faible capacité parasite et donc haute impédance, ne peuvent alors conduire les signaux radio, leur seuil diode étant supérieur à l'amplitude des signaux d'antenne. Si par contre une sortie comme 221 passe à un niveau haut de quelques volts, la diode correspondante, ici 33, est alors polarisée par un courant continu et est donc conductrice. Sa résistance dynamique, autour du point de repos en courant de polarisation, est réglée par le choix des valeurs des résistances de polarisation comme 34, et d'autant plus faible que le courant de polarisation est élevée. Chaque diode 33, 43, 53 constitue donc un interrupteur commandé par le microprocesseur 22 pour mettre en service (relier d'un côté à la masse) le condensateur de dérivation associé 32, 42, 52 et ainsi introduire une rotation de phase de 90 degrés dans la cellule considérée. En complément, ou variante, on peut prévoir un atténuateur réglable à la place de chaque diode 33, 43, 53 afin de mettre en service progressivement les condensateurs 32, 42, 52 et ainsi régler le déphasage de façon continue. Une augmentation progressive du courant de polarisation des diodes 33, 43, 53, par des sorties 221, 222, 223 analogiques de convertisseur CNA permettrait de même de moduler à volonté la résistance dynamique des diodes 33, 43, 53 pour constituer un atténuateur réglable en série avec les condensateurs 32, 42, 52.

L'antenne directionnelle 1, 2 mécaniquement statique, présentant une sensibilité variable avec l'angle de la direction de réception, est ainsi transformée, par le circuit 3 d'entraînement en rotation du diagramme de rayonnement, en une antenne électroniquement mobile et ainsi omnidirectionnelle. Il peut être prévu, dans certaines applications, que l'antenne soit aussi émettrice, vers l'émetteur des signaux qu'elle reçoit.

## Revendications

1. Récepteur radio courte portée pour signaux de données de véhicule automobile, comportant des moyens d'antenne (1, 2, 3), présentant un diagramme de rayonnement, reliés à un bloc (10, 11, 21, 22) de traitement des signaux reçus, agencé pour en extraire les données, récepteur **caractérisé par le fait que** les moyens d'antenne (1, 2, 3) comportent des circuits (3) d'entraînement en rotation du diagramme de rayonnement et le bloc de traitement comporte des circuits (22) de commande des circuits d'entraînement en rotation (3), associés à des circuits (21) de mesure du niveau de signal reçu dans au moins deux positions du diagramme, les circuits de mesure (21) étant agencés pour piloter les circuits de commande (22) en fonction des mesures.

2. Récepteur selon la revendication 1, dans lequel les moyens d'antenne comportent deux antennes indépendantes (1, 2) avec deux diagrammes de rayonnement respectifs décalés angulairement, reliées au bloc de traitement (10, 11, 21, 22) par les circuits d'entraînement en rotation (3), agencés pour sélectionner à cet effet l'une des antennes (1, 2).

3. Récepteur selon la revendication 2, dans lequel les antennes (1, 2) sont des pistes de circuit imprimé sensiblement perpendiculaires.

4. Récepteur selon la revendication 1, dans lequel les moyens d'antenne comportent deux éléments linéaires rayonnants (1, 2) et les circuits d'entraînement en rotation (3) relient l'un des deux éléments (2) à l'autre (1) et à un amplificateur (10) de réception de signal composite d'antenne.

5. Récepteur selon la revendication 4, dans lequel les éléments d'antenne (1, 2) sont des pistes de circuit imprimé sensiblement parallèles.

6. Récepteur selon l'une des revendications 4 et 5, dans lequel les circuits de mesure (21) sont agencés pour piloter, à travers les circuits des commande en rotation (22), une modulation de phase du signal composite et pour déterminer une phase de niveau maximal de réception.

## Claims

1. Short range radio receiver for motor vehicle data signals, comprising antenna means (1, 2 and 3), having a radiation pattern, connected to a unit (10, 11, 21 and 22) for processing the signals received, this being arranged for retrieving the data from them, the receiver being **characterized in that** the antenna means (1, 2 and 3) comprise circuits (3) for driving the radiation pattern in rotation and the processing unit comprises circuits (22) controlling the rotational drive circuits (3), associated with circuits (21) measuring the level of the received signal in at least two positions of the pattern, the measuring circuits (21) being arranged for monitoring the control circuits (22) on the basis of the measurements.

2. Receiver according to Claim 1, in which the antenna means comprise two independent antennae (1 and 2) with two respective radiation patterns offset in an angular manner, connected to the processing unit (10, 11, 21 and 22) by the rotational drive circuits (3), arranged for selecting one of the antennae (1 or 2) for this purpose.

3. Receiver according to Claim 2, in which the antennae (1 and 2) are substantially perpendicular printed circuit tracks.

4. Receiver according to Claim 1, in which the antenna means comprise two radiating linear elements (1 and 2) and the rotational drive circuits (3) connect one of the two elements (2) to the other one (1) and to an antenna composite signal receiving amplifier (10).

5. Receiver according to Claim 4, in which the antenna elements (1 and 2) are substantially parallel printed circuit tracks.

6. Receiver according to Claim 4 or 5, in which the measuring circuits (21) are arranged for monitoring - through the rotational control circuits (22) - a phase modulation of the composite signal and for determining a reception maximum level phase.

## Patentansprüche

1. Funkempfänger mit kurzer Reichweite für Kraftfahrzeug-Datensignale, der Antenneneinrichtungen (1, 2, 3) mit einem Strahlungsdiagramm aufweist, die mit einem Block (10, 11, 21, 22) zur Verarbeitung der empfangenen Signale verbunden sind, welcher eingerichtet ist, um die Daten daraus zu entnehmen, wobei der Empfänger **dadurch gekennzeichnet ist, dass** die Antenneneinrichtungen (1, 2, 3) Drehantriebsschaltungen (3) für das Strahlungsdiagramm aufweisen und der Verarbeitungsblock Schaltungen (22) zur Steuerung der Drehantriebsschaltungen (3) aufweist, die Messschaltungen (21) des empfangenen Signalpegels in mindestens zwei Stellungen des Diagramms zugeordnet sind, wobei die Messschaltungen (21) eingerichtet sind, um die Steuerschaltungen (22) in Abhängigkeit von den Messungen zu steuern.

2. Empfänger nach Anspruch 1, bei dem die Antenneneinrichtungen zwei unabhängige Antennen (1, 2) mit zwei jeweiligen winkelversetzten Strahlungsdiagrammen aufweisen, die mit dem Verarbeitungsblock (10, 11, 21, 22) über die Drehantriebsschaltungen (3) verbunden sind, welche eingerichtet sind, um zu diesem Zweck eine der Antennen (1, 2) auszuwählen.

3. Empfänger nach Anspruch 2, bei dem die Antennen (1, 2) im Wesentlichen lotrechte Leiterbahnen sind.

4. Empfänger nach Anspruch 1, bei dem die Antenneneinrichtungen zwei lineare strahlende Elemente (1, 2) aufweisen und die Drehantriebsschaltungen (3) eines der zwei Elemente (2) mit dem anderen (1) und mit einem Empfangsverstärker (10) eines zusammengesetzten Antennensignals verbinden.

5. Empfänger nach Anspruch 4, bei dem die Antennenelemente (1, 2) im Wesentlichen parallele Leiterbahnen sind.

6. Empfänger nach einem der Ansprüche 4 und 5, bei dem die Messschaltungen (21) eingerichtet sind, um über die Drehsteuerschaltungen (22) eine Phasenmodulation des zusammengesetzten Signals zu steuern und um eine Phase mit maximalem Empfangspegel zu bestimmen.
